# EUROPÄISCHE PATENTANMELDUNG

(11) **EP 2 706 047 A2**
(43) Veröffentlichungstag der Anmeldung: **12.03.2014**
(21) Anmeldenummer: 13182966.5
(22) Anmeldetag: 04.09.2013
(51) Int. Cl.: C04B 28/02, C04B 41/00

(54) **Bauwerk**

(30) Priorität: 07.09.2012 DE 102012108362
(71) Anmelder: HOCHTIEF Solutions AG, 45128 Essen (DE)
(72) Erfinder: Billig, Bodo, 45481 Mülheim (DE); Otremba, Hermann, 45665 Recklinghausen (DE)
(74) Vertreter: Rohmann, Michael

(57) **Zusammenfassung**

Bauwerk oder Bauteil mit einem Baukörper und einem auf der Außenseite des Baukörpers angeordneten Schutzmantel zum Schutz gegen kurzzeitdynamische Einwirkungen, beispielsweise gegen Stoß, Anprall oder Explosion. Der Schutzmantel weist zumindest zwei Schichten auf. Es ist eine erste, dem Baukörper zugewandte Schicht aus kompressiblem Material vorgesehen und eine zweite äußere Schicht aus mikrobewehrtem Beton.

## Beschreibung

Die Erfindung betrifft ein Bauwerk oder Bauteil mit einem Baukörper und einem auf der Außenseite des Baukörpers angeordneten Schutzmantel zum Schutz gegen kurzzeitdynamische Einwirkungen, wie beispielsweise Stoß, Anprall oder Explosion. - Bauwerk meint insbesondere einen Tunnel oder eine Brücke. Grundsätzlich können mit den erfindungsgemäßen Maßnahmen aber auch andere Arten von Bauwerken geschützt werden.

In der Praxis ergibt sich das Problem, Bauwerke effektiv vor kurzzeitdynamischen Einwirkungen bzw. vor starken mechanischen Einwirkungen zu schützen. Diese Einwirkungen kommen insbesondere durch den Anprall von Objekten, wie Autos oder dgl. und insbesondere von Flugobjekten oder dergleichen, durch Brand und insbesondere durch Explosionen zustande. Häufig resultieren nach solchen Einwirkungen gravierende Schäden an den Bauwerken. Ein besonderes Problem stellt das für kritische Bauwerke, wie beispielsweise Tunnel, Brücken oder Kraftwerke dar. Aus der Praxis sind bereits verschiedene Schutzmaßnahmen zur Verminderung von Schäden aufgrund der genannten Einwirkungen bekannt. Diese bekannten Maßnahmen sind größtenteils sehr aufwendig und kostspielig und/oder gewährleisten keinen ausreichenden Schutz bei besonders starken Einwirkungen, beispielsweise infolge von Explosionen. Daher sind derartige Schutzmaßnahmen für Bauwerke verbesserungsbedürftig.

Demgegenüber liegt der Erfindung das technische Problem zugrunde, ein Bauwerk der eingangs genannten Art anzugeben, bei dem effektive Schutzmaßnahmen zur Verminderung von Schäden auch infolge von kurzzeitdynamischen Einwirkungen realisiert sind.

Zur Lösung dieses technischen Problems lehrt die Erfindung ein Bauwerk oder Bauteil mit einem Baukörper und einem auf der Außenseite des Baukörpers angeordneten Schutzmantel zum Schutz gegen kurzzeitdynamische Einwirkungen, beispielsweise gegen Explosionen, wobei der Schutzmantel zumindest zwei Schichten aufweist, wobei eine erste dem Bauwerk bzw. Bauteil zugewandte Schicht aus kompressiblem Material vorgesehen ist und wobei eine zweite äußere Schicht aus mikrobewehrtem Beton bzw. im Wesentlichen aus mikrobewehrtem Beton vorhanden ist.

Mikrobewehrter Beton meint im Rahmen der Erfindung insbesondere einen Beton mit zumindest einem Bewehrungsgitter mit einer geringen Maschenweite von kleiner oder gleich 50 mm. - Es liegt im Rahmen der Erfindung, dass der Baukörper des erfindungsgemäßen Bauwerkes oder Bauteils aus Beton, Stahlbeton, Spannbeton, Stahlfaserbeton, Stahl oder Stahlverbund bzw. im Wesentlichen aus diesen Materialien besteht.

Kompressibles Material meint im Rahmen der Erfindung insbesondere ein Material zur nachgiebigen Aufnahme von mechanischen Kräften. Nachgiebige Aufnahme von mechanischen Kräften meint dabei, dass das Material unter Einwirkung mechanischer Kräfte zu einem gewissen Ausmaß komprimierbar bzw. verformbar ist. Es liegt im Rahmen der Erfindung, dass die erste dem Baukörper zugewandten Schicht aus einem erhärteten Mörtel zur nachgiebigen Aufnahme von mechanischen Kräften besteht oder im Wesentlichen aus diesem erhärteten Mörtel besteht. Der erhärtete Mörtel ist also das kompressible Material der ersten Schicht.

Nach besonders bevorzugter Ausführungsform der Erfindung ist die erste - dem Baukörper zugewandte - Schicht aus einem Mörtel gebildet, der im noch nicht erhärteten Zustand (Frischmörtel) zumindest ein hydraulisches Bindemittel sowie feste Teilchen zumindest eines Polymerschaumstoffes (geschäumtes Polymer) und Wasser enthält. Als hydraulisches Bindemittel wird vorzugsweise ein Zement und besonders bevorzugt Hochofenzement eingesetzt. Empfohlenermaßen handelt es sich bei dem Polymerschaumstoff um geschäumtes Polystyrol (EPS). Die Teilchen des Polymerschaumstoffes bzw. des geschäumten Polystyrols sind zweckmäßigerweise kugelförmig ausgebildet. Es empfiehlt sich, dass der größte Durchmesser der Teilchen des Polymerschaumstoffes 0,2 bis 7 mm, bevorzugt 0,5 bis 4 mm und besonders bevorzugt 0,5 bis 2 mm, beträgt.

Es liegt im Rahmen der Erfindung, dass der noch nicht erhärtete Mörtel (Frischmörtel) zumindest eine oberflächenaktive Substanz enthält. Zweckmäßigerweise enthält der noch nicht erhärtete Mörtel zumindest einen flüssigen Schaum, insbesondere einen flüssigen Schaum auf Tensid-Basis. Empfohlenermaßen ist der flüssige Schaum in dem noch nicht erhärteten Mörtel in einer Menge von 1 bis 7 kg/m³, bevorzugt in einer Menge von 2 bis 6 kg/m³ und besonders bevorzugt in einer Menge von 3 bis 5 kg/m³ enthalten. Eine vorteilhafte Ausführungsform der Erfindung zeichnet sich dadurch aus, dass die Schaumdichte des flüssigen Schaums 0,05 bis 0,11 kg/dm³ und bevorzugt 0,06 bis 0,1 kg/dm³ beträgt.

Eine empfohlene Ausführungsform der Erfindung ist **dadurch gekennzeichnet, dass** der noch nicht erhärtete Mörtel (Frischmörtel) zumindest ein latent hydraulisches Bindemittel, insbesondere Flugasche, enthält. - Die Dichte des noch nicht erhärteten Mörtels (Frischmörteldichte) beträgt zweckmäßigerweise 150 bis 950 kg/m³.

Es empfiehlt sich, dass die zweite äußere Schicht aus mikrobewehrtem Hochleistungsbeton bzw. im Wesentlichen aus mikrobewehrtem Hochleistungsbeton besteht. Hochleistungsbeton meint dabei insbesondere einen Beton mit einer Endfestigkeit ≥ 80 N/mm². Es liegt im Rahmen der Erfindung, dass die zweite äußere Schicht eine hohe Duktilität aufweist, insbesondere eine höhere Duktilität als die des Baukörpers. Duktilität meint insbesondere die Eigenschaft oder Fähigkeit eines Werkstoffes, sich bei Belastung bzw. Überbelastung plastisch zu verformen bzw. stark plastisch zu verformen. Es liegt weiterhin im Rahmen der Erfindung, dass sich die zweite äußere Schicht bei kurzzeitdynamischen Einwirkungen, beispielsweise beim Aufprallen eines Flugobjektes oder bei einer Explosion, zu einem gewissen Ausmaß bzw. zu einem verhältnismäßig hohen Ausmaß plastisch verformt.

Eine besonders bevorzugte Ausführungsform der Erfindung ist **dadurch gekennzeichnet, dass** die zweite äußere Schicht als Bewehrung zumindest eine Bewehrungsmatte mit einer Mehrzahl voneinander beabstandeten Bewehrungsgittern aufweist, wobei die Maschenweite der Bewehrungsgitter 5 bis 50 mm, vorzugsweise 5 bis 35 mm und bevorzugt 5 bis 25 mm beträgt. Zweckmäßigerweise sind die Bewehrungsgitter parallel zueinander bzw. im Wesentlichen parallel zueinander angeordnet. Zwischen den Bewehrungsgittern können Abstandshalter vorgesehen sein. Empfohlenermaßen sind die Bewehrungsgitter über Verbindungselemente bzw. über Verbindungsdrähte - bevorzugt aus Metall - miteinander verbunden. Zweckmäßigerweise handelt es sich bei den Bewehrungsgittern um Metalldrahtgitter. Nach bevorzugter Ausführungsform der Erfindung weisen die Gitterstränge der Bewehrungsgitter einen Durchmesser bzw. eine Dicke von 0,2 bis 5 mm, vorzugsweise von 0,5 bis 3 mm und bevorzugt von 1 bis 2,5 mm auf.

Es liegt im Rahmen der Erfindung, dass die erste dem Baukörper zugewandte Schicht eine größere Dicke aufweist als die zweite äußere Schicht. Zweckmäßigerweise ist die erste dem Baukörper zugewandte Schicht dicker als die zweite äußere Schutzschicht.

Es liegt fernerhin im Rahmen der Erfindung, dass die erste dem Baukörper zugewandte Schicht und/oder die zweite äußere Schicht eine geringere Dicke aufweist/aufweisen als der Baukörper. Vorzugsweise ist die Dicke der ersten dem Baukörper zugewandten Schicht und/oder die Dicke der zweiten äußeren Schicht geringer als die Hälfte der Dicke des Baukörpers.

Zweckmäßigerweise beträgt bei einer Dicke des Baukörpers von 20 bis 100 cm, insbesondere von 30 bis 80 cm bzw. von 40 bis 60 cm, die Dicke der ersten Schicht 5 bis 20 cm, insbesondere 7 bis 15 cm und bevorzugt 10 bis 12 cm. Vorzugsweise beträgt bei einer Dicke des Baukörpers von 20 bis 100 cm, insbesondere von 30 bis 80 cm bzw. von 40 bis 60 cm, die Dicke der zweiten äußeren Schicht 3 bis 10 cm, insbesondere 4 bis 8 cm und bevorzugt 5 bis 6 cm.

Es liegt im Rahmen der Erfindung, dass die erste dem Baukörper zugewandte Schicht unmittelbar bzw. ohne Abstand vor dem Baukörper angeordnet ist. Grundsätzlich könnte eine dünne Haftvermittlungsschicht zwischen erster Schicht und Baukörper vorgesehen sein. - Es liegt weiterhin im Rahmen der Erfindung, dass die zweite äußere Schicht unmittelbar bzw. ohne Abstand vor der ersten dem Baukörper zugewandten Schicht angeordnet ist. Auch hier könnte grundsätzlich eine dünne Haftvermittlungsschicht zwischen der ersten und der zweiten Schicht vorgesehen sein. Zweckmäßigerweise besteht der erfindungsgemäße Schutzmantel für den Baukörper des Bauwerkes oder Bauteils aus der ersten und der zweiten Schicht bzw. im Wesentlichen, insbesondere zu mindestens 90%, bevorzugt zumindest 95% seiner Dicke, aus der ersten und der zweiten Schicht.

Der Erfindung liegt die Erkenntnis zugrunde, dass bei dem erfindungsgemäßen Bauwerk oder Bauteil ein effektiver und funktionssicherer Schutz gegenüber kurzzeitdynamischen Einwirkungen bzw. gegenüber starken mechanischen Einwirkungen - beispielsweise infolge von Explosionen oder dergleichen - gewährleistet ist. Schäden infolge eines Anpralls eines Flugobjektes, infolge eines Brandes und insbesondere infolge von Explosionen können wirksam reduziert bzw. minimiert werden. Das gilt vor allem auch für kritische Bauwerke wie Tunnel, Brücken oder Kraftwerke. Nichtsdestoweniger können die erfindungsgemäßen Schutzmaßnahmen mit verhältnismäßig geringem Aufwand und mit relativ geringen Kosten realisiert werden.

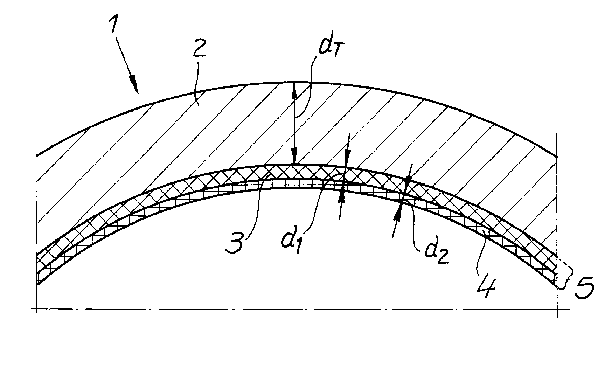

Nachfolgend wird die Erfindung anhand einer lediglich ein Ausführungsbeispiel darstellenden Zeichnung näher erläutert. - Die einzige Figur zeigt schematisch einen Schnitt durch eine erfindungsgemäß ertüchtigte Wandung eines Bauwerkes, nämlich eines Tunnels.

Die erfindungsgemäß ertüchtigte Tunnelwandung 1 weist zunächst die herkömmliche Tunnelschale 2 als Baukörper auf. Nicht dargestellt ist der Boden bzw. Fels und weitere möglicherweise zwischen Boden bzw. Fels und Tunnelschale 2 angeordnete Elemente wie z. B. Außenschale, Abdichtung, Ringspaltverpressung oder Ähnliches. Diese Tunnelschale 2 besteht vorzugsweise und im Ausführungsbeispiel aus Beton und weist eine Dicke d_{T} auf. Auf der Tunnelschale 2 ist zur Ertüchtigung ein Schutzmantel 5 zum Schutz gegen kurzzeitdynamische Einwirkungen angeordnet. Der Schutzmantel 5 weist eine erste Schicht 3 und eine zweite Schicht 4 auf. Tunnelinnenseitig ist unmittelbar vor der Tunnelschale 2 die erste der Tunnelschale 2 zugewandte Schicht 3 aus kompressiblem Material vorgesehen. Bei dem kompressiblen Material dieser ersten Schicht 3 handelt es sich vorzugsweise und im Ausführungsbeispiel um einen erhärteten Mörtel zur nachgiebigen Aufnahme von mechanischen Kräften. Diese erste Schicht 3 ist empfohlenermaßen aus einem Mörtel gebildet, der im noch nicht erhärteten Zustand zumindest ein hydraulisches Bindemittel - vorzugsweise zumindest einen Zement - sowie feste Teilchen zumindest eines Polymerschaumstoffes - bevorzugt geschäumtes Polystyrol - und Wasser enthält. Die erste Schicht 3 weist im Übrigen eine Dicke d₁ auf.

Tunnelinnenseitig ist im Ausführungsbeispiel unmittelbar vor der ersten Schicht 3 die zweite Schicht 4 aus mikrobewehrtem Hochleistungsbeton angeordnet. Diese zweite Schicht 4 weist als Bewehrung zumindest eine in den Figuren nicht dargestellte Bewehrungsmatte mit einer Mehrzahl voneinander beabstandeten Bewehrungsgittern auf, wobei die Maschenweite der Bewehrungsgitter bevorzugt weniger als 40 mm beträgt. Die zweite Schicht 4 weist im Übrigen eine Dicke d₂ auf.

In der Figur ist erkennbar, dass die Dicke d_{T} der Tunnelschale 2 deutlich größer ist als die Dicke d₁ der ersten Schicht 3 und auch deutlich größer ist als die Dicke d₂ der zweiten Schicht 4. Weiterhin ist die Dicke d₁ der ersten Schicht 3 größer als die Dicke d₂ der zweiten Schicht 4.

Gemäß einem Ausführungsbeispiel weist die Tunnelschale 2 eine Dicke d_{T} von 40 cm, die erste Schicht 3 eine Dicke d₁ von 10 cm und die zweite Schicht 4 eine Dicke d₂ von 5 cm auf.

## Patentansprüche

1. Bauwerk bzw. Bauteil mit einem Baukörper und einem auf der Außenseite des Baukörpers angeordneten Schutzmantel (5) zum Schutz gegen kurzzeitdynamische Einwirkungen, beispielsweise gegen Explosionen, wobei der Schutzmantel (5) zumindest zwei Schichten (3, 4) aufweist, wobei eine erste dem Baukörper zugewandte Schicht (3) aus kompressiblem Material vorgesehen ist und wobei eine zweite äußere Schicht (4) aus mikrobewehrtem Beton bzw. im Wesentlichen aus mikrobewehrtem Beton vorhanden ist.

2. Bauwerk bzw. Bauteil nach Anspruch 1, wobei der Baukörper aus Beton, Stahlbeton, Spannbeton, Stahlfaserbeton, Stahl oder Stahlverbund oder im Wesentlichen aus diesen Materialien besteht.

3. Bauwerk bzw. Bauteil nach einem der Ansprüche 1 oder 2, wobei die erste Schicht (3) aus einem erhärteten Mörtel zur nachgiebigen Aufnahme von mechanischen Kräften besteht oder im Wesentlichen aus diesem erhärteten Mörtel besteht.

4. Bauwerk bzw. Bauteil nach einem der Ansprüche 1 bis 3, wobei die erste Schicht (3) aus einem Mörtel gebildet ist, der im noch nicht erhärteten Zustand zumindest ein hydraulisches Bindemittel sowie feste Teilchen zumindest eines Polymerschaumstoffes und Wasser enthält.

5. Bauwerk bzw. Bauteil nach Anspruch 4, wobei der noch nicht erhärtete Mörtel zumindest einen flüssigen Schaum, insbesondere einen flüssigen Schaum auf Tensid-Basis, enthält.

6. Bauwerk bzw. Bauteil nach einem der Ansprüche 4 oder 5, wobei der noch nicht erhärtete Mörtel zumindest ein latent hydraulisches Bindemittel, insbesondere Flugasche, enthält.

7. Bauwerk bzw. Bauteil nach einem der Ansprüche 1 bis 6, wobei die zweite Schicht (4) aus mikrobewehrtem Hochleistungsbeton bzw. im Wesentlichen aus mikrobewehrtem Hochleistungsbeton besteht.

8. Bauwerk bzw. Bauteil nach einem der Ansprüche 1 bis 7, wobei die zweite Schicht (4) eine höhere Duktilität aufweist als der Baukörper des Bauwerks bzw. Bauteils.

9. Bauwerk bzw. Bauteil nach einem der Ansprüche 1 bis 8, wobei die zweite Schicht (4) als Bewehrung zumindest eine Bewehrungsmatte mit einer Mehrzahl voneinander beabstandeten Bewehrungsgittern aufweist, wobei die Maschenweite der Bewehrungsgitter 5 bis 50 mm, vorzugsweise 5 bis 35 mm und bevorzugt 5 bis 25 mm beträgt.

10. Bauwerk bzw. Bauteil nach Anspruch 9, wobei die Gitterstränge der Bewehrungsgitter einen Durchmesser von 0,2 bis 5 mm, vorzugsweise von 0,5 bis 3 mm und bevorzugt von 1 bis 2,5 mm aufweisen.

11. Bauwerk bzw. Bauteil nach einem der Ansprüche 1 bis 10, wobei die erste Schicht (3) eine größere Dicke (d₁) aufweist als die zweite Schicht (4).

12. Bauwerk bzw. Bauteil nach Anspruch 11, wobei die erste Schicht (3) um einen Faktor 1,5 bis 5, bevorzugt 2 bis 4 dicker ist als die zweite Schicht (4).

13. Bauwerk bzw. Bauteil nach einem der Ansprüche 1 bis 12, wobei die erste Schicht (3) und/oder die zweite Schicht (4) eine geringere Dicke aufweist/aufweisen als der Baukörper 5.

14. Bauwerk bzw. Bauteil nach einem der Ansprüche 1 bis 13, wobei die Dicke (d₁) der ersten Schicht (3) und/oder die Dicke (d₂) der zweiten Schicht (4) geringer ist als die Hälfte der Dicke (d_{T}) des Bauwerkkörpers.

15. Bauwerk bzw. Bauteil nach einem der Ansprüche 1 bis 14, wobei bei einer Dicke (d_{T}) des Baukörpers von 20 bis 100 cm, insbesondere von 30 bis 80 cm bzw. von 40 bis 60 cm, die Dicke (d₁) der ersten Schicht (3) 5 bis 20 cm, insbesondere 7 bis 15 cm und bevorzugt 10 bis 12 cm beträgt und/oder die Dicke (d₂) der zweiten Schicht (4) 3 bis 10 cm, insbesondere 4 bis 8 cm und bevorzugt 5 bis 6 cm beträgt.
